# FASCICULE DE BREVET EUROPEEN

(11) **EP 2 671 802 B1**
(45) Date de publication et mention de la délivrance du brevet: **25.05.2016**
(21) Numéro de dépôt: 13001781.7
(22) Date de dépôt: 08.04.2013
(51) Int. Cl.: B64D 25/06, B60R 22/00, B60R 21/207, B60R 21/201, B60N 2/48, B64D 11/06, B60R 21/18, B60R 22/02

(54) **Dispositif de protection d'un individu assis sur un siège, siège et véhicule**
Schutzvorrichtung für einen Fahrzeuginsassen auf einem Sitz, entsprechender Sitz und entsprechendes Fahrzeug
Device for protecting a person sitting on a seat, seat and vehicle

(30) Priorité: 06.06.2012 FR 1201635
(43) Date de publication de la demande: 11.12.2013
(73) Titulaire: Airbus Helicopters, 13725 Marignane Cedex (FR)
(72) Inventeur: Santana-Gallego, Tomas, F-13100 Aix En Provence (FR)
(74) Mandataire: GPI & Associés

(56) Documents cités:
- WO-A1-2006/133739
- DE-A1-102008 028 653
- DE-A1-102009 040 641
- JP-A- 2007 276 514
- US-B1- 7 665 761

## Description

La présente invention concerne un dispositif de protection d'un individu assis sur un siège, un siège et un véhicule. Plus particulièrement, l'invention vise un dispositif de protection et de rétention d'un passager d'un aéronef.

Pour améliorer la sécurité d'un passager d'un véhicule, il est connu d'utiliser des dispositifs mettant en oeuvre un harnais de rétention pour maintenir un individu contre un siège. Un tel harnais de rétention est parfois dénommé « ceinture de sécurité ».

Le harnais de rétention comprend des sangles, éventuellement rétractables, fixées en au moins trois points du véhicule.

Sur les aéronefs, il est courant de prévoir des harnais à quatre ou cinq points d'attaches munis notamment d'une sangle d'épaule gauche et d'une sangle d'épaule droite fixées à une boucle.

Un harnais tend ainsi à maintenir le buste d'un individu contre le dossier d'un siège.

Cependant, les forces d'inertie exercées sur l'individu durant le crash tendent à déplacer fortement la tête de cet individu. La tête de l'individu peut se déplacer longitudinalement de l'avant vers l'arrière sous l'effet de forces d'inertie longitudinales, ou encore latéralement de la droite vers la gauche et inversement sous l'effet de forces d'inertie latérales.

Pour éviter des blessures fatales subies par un individu, l'aéronef peut alors comprendre un système de protection gonflable incluant des coussins gonflables dénommés « airbag » en langue anglaise.

Le document US 7 665 761, qui est considéré comme l'art antérieur le plus proche, présente un harnais de rétention à quatre points d'attache équipé d'un dispositif de protection gonflable.

Ce dispositif de protection gonflable est muni notamment d'un coussin latéral gonflable agencé sur une sangle d'épaule du harnais de rétention.

De plus, un coussin latéral est pourvu d'une première chambre attachée à la sangle d'épaule et d'une deuxième chambre communiquant avec la première chambre.

Le dispositif inclut aussi un gonfleur relié à la première chambre par un tuyau. Si nécessaire, le gonfleur injecte un fluide dans la première chambre pour la gonfler, la deuxième chambre étant ensuite gonflée au travers de la première chambre.

Il est à noter que la deuxième chambre a une forme de L lorsqu'elle est gonflée.

Le document US 2007/0001435 présente un coussin de protection gonflable disposé sur une sangle d'un harnais de rétention d'un individu.

Cette sangle étant mobile, le coussin de protection coulisse le long de cette sangle.

Ainsi, une boucle du harnais de rétention comprend un moyen d'acheminement de fluide vers le coussin de protection.

On comprend qu'il peut être délicat d'acheminer un fluide vers un coussin de protection, d'autant plus lorsque le coussin de protection et/ou des sangles d'un harnais de rétention accueillant un tel coussin sont mobiles.

De plus, il peut être délicat d'agencer un dispositif de protection sur un siège existant non prévu à cet effet.

On connaît en outre un dispositif de protection ayant un ensemble d'organes gonflables de protection incluant un moyen latéral gonflable gauche, un moyen latéral gonflable droit et un coussin de nuque.

Le document WO 2012/013.985 décrit une têtière de siège éjectable. Cette têtière comporte une paire de flancs latéraux gonflables. Chaque paire gonflable est reliée à la têtière par une jupe triangulaire au moyen d'une corde.

En outre, un organe déchirable dénommé « tear webbing » participe au déploiement progressif des flancs latéraux suivant une cinématique particulière.

Le document EP 0592815 présente un coussin gonflable d'épaule pour bloquer latéralement la tête d'un individu. Le coussin gonflable d'épaule gonflé est naturellement maintenu en place par une ceinture de sécurité.

Le document EP 1818222 décrit un airbag de ceinture au niveau de l'épaule, la ceinture glissant dans une boucle disposée dans le haut du dossier d'un siège.

Au gonflement de l'airbag, la boucle peut coulisser verticalement dans le dossier pour laisser l'airbag se gonfler et se déployer lui aussi verticalement. Ce déploiement vertical est uniquement du à la forme de l'airbag. La boucle contient la forme de l'airbag.

On connaît aussi le document EP 1987991.

L'état de la technique inclut donc de multiples dispositifs de protection d'un individu assis sur un siège d'un véhicule en mouvement.

On connaît aussi les documents WO2006/133739, JP 2007-276514, DE 10 209 040641 et DE 10 2008 028653.

La présente invention a alors pour objet de proposer un dispositif de protection d'un individu assis sur un siège visant à être efficace pour protéger un individu soumis à des forces d'inertie latérales et/ou longitudinales.

L'invention vise alors un dispositif de protection d'un individu maintenu sur un siège d'un véhicule à l'aide d'un harnais comprenant une sangle d'épaule gauche et une sangle d'épaule droite.

Ce dispositif de protection comprend une têtière portant un ensemble d'organes gonflables de protection incluant un coussin de nuque ainsi qu'un moyen latéral gonflable gauche et un moyen latéral gonflable droit, le dispositif de protection comportant un moyen de glissement par moyen latéral gonflable pouvant être traversé par une sangle d'épaule pour permettre un mouvement relatif entre chaque moyen latéral gonflable et une sangle d'épaule. Le coussin de nuque est fixé à la têtière et communique avec chaque moyen latéral gonflable, chaque moyen latéral gonflable ayant un coussin latéral supérieur fixé à un moyen de glissement.

Le dispositif de protection comporte donc un coussin latéral supérieur droit qui est fixé à un moyen de guidage droit et qui en liaison avec le coussin de nuque. De même, ce dispositif de protection comporte un coussin latéral supérieur gauche qui est fixé à un moyen de guidage gauche et en liaison avec le coussin de nuque.

Un gonfleur peut alors gonfler le coussin de nuque, puis les coussins latéraux supérieurs via le coussin de nuque.

Par ailleurs, chaque coussin latéral supérieur comporte une surface interne apte à être en contact avec la tête d'un individu et une surface externe opposée à la surface interne.

Ce dispositif de protection possède de manière remarquable un moyen de retenue pour retenir latéralement les coussins latéraux supérieurs, le moyen de retenue comportant une sangle de retenue qui est accolée à la surface externe des coussins latéraux supérieurs, le moyen de retenue ayant un dispositif de fixation de la sangle de retenue à la têtière.

La sangle de retenue comporte alors éventuellement un corps de retenue en forme de C. Cette sangle de retenue présente alors deux branches entre lesquelles sont disposés les coussins latéraux supérieurs.

Un tel moyen de retenue permet d'optimiser la protection offerte par les coussins latéraux supérieurs.

En effet, les coussins latéraux supérieurs visent à minimiser le déplacement de la tête d'un individu suite à un accident d'un véhicule, et notamment d'un aéronef.

Lors d'un accident générant des forces d'inertie latérales, le moyen de retenue optimise la rétention de la tête d'un individu en combinaison avec le coussin latéral supérieur, le moyen de retenue tendant à restreindre le déplacement du coussin latéral supérieur.

De plus, lors d'un accident générant des forces d'inertie longitudinales, le moyen de retenue peut tendre à optimiser le placement de chaque coussin latéral supérieur par rapport à la tête d'un individu.

Dès lors, l'invention associe à chaque coussin latéral supérieur gonflable un moyen de retenue additionnel, pour notamment limiter le déplacement latéral de chaque coussin latéral supérieur sous l'effet de forces d'inertie latérales.

Le dispositif de protection peut de plus notamment comprendre une ou plusieurs des caractéristiques qui suivent.

Par exemple, la têtière peut comprendre un gonfleur en communication avec l'intérieur du coussin de nuque, pour insuffler un fluide dans l'ensemble de moyens gonflables.

Le dispositif de protection est alors relativement compact et complet.

Par ailleurs, chaque moyen latéral gonflable comporte éventuellement un coussin latéral inférieur.

En position déployée, chaque coussin latéral inférieur peut être disposé sous un moyen de guidage, chaque coussin latéral supérieur étant disposé au dessus du moyen de guidage. En outre, la sangle de retenue enserre les coussins latéraux supérieurs pour participer à la rétention de la tête d'un individu

Par ailleurs, ces coussins latéraux supérieurs sont soit indépendants structurellement et fonctionnellement, soit accolés structurellement l'un à l'autre mais fonctionnellement indépendants, soit fusionnés de manière à former un unique coussin sensiblement en forme de C.

Selon une première réalisation, la sangle de retenue comporte un maillage plaqué contre les surfaces externes des coussins latéraux supérieurs. La sangle de retenue est alors un filet de retenue.

Selon une deuxième réalisation, la sangle de retenue comporte un corps de retenue englobant chaque coussin latéral supérieur, le corps de retenue plein de manière à être dépourvu de mailles creuses contrairement à la première réalisation décrite précédemment.

En outre, selon une première variante, le dispositif de protection comportant un moyen de glissement gauche coopérant avec un moyen latéral gonflable gauche et un moyen de glissement droit coopérant avec un moyen latéral gonflable droit, la sangle de retenue peut comporter un flanc de fixation gauche fixé au moyen de glissement gauche et un flanc de fixation droit fixé au moyen de glissement droit.

La sangle de retenue peut posséder un corps en forme de C, muni de deux flancs de fixation au niveau de ses branches latérales.

Selon une deuxième variante, la sangle de retenue est fixée à une surface externe de chaque coussin latéral supérieur. Par exemple, la sangle de retenue est collée ou encore cousu à chaque coussin latéral supérieur.

La première variante et la deuxième variante peuvent être combinées selon une variante préférée.

Le gonflement des coussins latéraux supérieurs entraînent alors l'extension et la mise sous tension de la sangle de retenue.

En outre, le coussin de nuque ayant une face interne en regard de la têtière et une face externe en regard des coussins latéraux supérieurs, la sangle de retenue peut être fixée à ladite face externe du coussin de nuque.

En outre, le dispositif de fixation peut comporter une sangle de fixation solidaire de la sangle de retenue ainsi qu'un logement de fixation ménagé dans la têtière, le logement comportant un orifice de sortie traversé par la sangle de fixation.

La sangle de retenue est alors fixée directement à la têtière par la sangle de fixation.

Un tel orifice de sortie peut présenter une partie centrale comprise entre deux parties extrêmales, ladite partie centrale ayant une première épaisseur constante pour autoriser un déplacement longitudinal de la sangle de fixation et donc de la sangle de retenue, et chaque partie extrémale ayant une deuxième épaisseur décroissant à partir de la partie centrale pour former un moyen de blocage latéral de la sangle de retenue.

Ainsi, la sangle de fixation autorise un déplacement longitudinal de la sangle de retenue conjointement avec les moyens latéraux gonflable et le buste d'un individu, sous l'effet des forces d'inertie longitudinales.

Par contre, la sangle de fixation tend à rester bloquée dans le logement lorsque des forces d'inertie latérales sont subies, pour optimiser la protection de la tête d'un individu.

Par exemple, chaque moyen de glissement étant fixé par une section fusible à la têtière pour pouvoir se mouvoir conjointement avec le buste d'un individu sous l'effet des forces d'inertie longitudinales, la sangle de fixation peut inclure une pluralité d'inserts tels que des inserts cylindriques éventuellement.

Chaque insert a alors une épaisseur inférieure à la première épaisseur pour pouvoir s'échapper du logement via ladite partie centrale sous l'effet de forces d'inertie entraînant la rupture de la section fusible. Par contre, chaque insert a une épaisseur supérieure à la deuxième épaisseur afin de ne pas pouvoir s'échapper du logement via une partie extrémale, sous de forces d'inertie latérales par exemple.

En outre, la sangle de fixation incluant une pluralité d'inserts, le système de fixation peut être muni d'un système auto-agrippant comportant un premier moyen auto-agrippant fixé sur la sangle de fixation en vis-à-vis du logement de fixation sous chaque insert, ledit système auto-agrippant comportant un deuxième moyen auto-agrippant fixé sur une paroi dudit logement coopérant par interférence de forme avec chaque premier moyen auto-agrippant.

Le deuxième moyen auto-agrippant peut comprendre une unique bande auto-agrippante coopérant avec chaque premier moyen auto-agrippant, ou encore une bande auto-agrippante par premier moyen auto-agrippant par exemple.

Un moyen auto-agrippant peut comprendre une pluralité de boucles, l'autre moyen auto-agrippant incluant une pluralité de crochets aptes à coopérer avec lesdites boucles. On se référera à la littérature pour obtenir des informations relatives à un tel système de fixation auto-agrippant.

La sangle de fixation incluant une pluralité d'inserts séparés deux à deux par une portion de sangle, chaque portion de sangle séparant deux inserts au sein d'un logement est alors éventuellement pliée.

Ainsi, lorsque des efforts d'inertie longitudinaux sont exercés, la sangle de fixation peut permettre un déplacement longitudinal de la sangle de retenue en se dépliant.

De plus, le système auto-agrippant génère une force lors de ce dépliage tendant à faire remonter chaque coussin latéral supérieur vers la tête d'un individu pour optimiser la protection de cet individu.

Outre un dispositif de protection d'un individu, l'invention vise un siège muni d'un dossier et d'un harnais de rétention d'un individu comprenant une sangle d'épaule gauche et une sangle d'épaule droite. Ce siège comporte alors un dispositif de protection selon l'invention.

De plus, l'invention vise un véhicule comportant un tel siège.

L'invention et ses avantages apparaîtront avec plus de détails dans le cadre de la description qui suit avec des exemples de réalisation donnés à titre illustratif en référence aux figures annexées qui représentent :
- la figure 1, une vue présentant un véhicule muni d'un siège selon l'invention,
- la figure 2, une vue présentant un moyen de retenue plié,
- la figure 3 une vue montrant un moyen de retenue retenant latéralement des coussins latéraux supérieurs,
- la figure 4, une vue présentant une sangle de fixation agencé dans un logement de fixation d'une têtière,
- les figures 5 à 8, des vues explicitant le fonctionnement de l'invention en présence de forces d'inertie longitudinales comparé à un dispositif de protection dépourvu du moyen de retenue,
- les figures 9 à 13, des vues explicitant le fonctionnement de l'invention en présence de forces d'inertie latérales comparé à un dispositif de protection dépourvu du moyen de retenue.

Les éléments présents dans plusieurs figures distinctes sont affectés d'une seule et même référence.

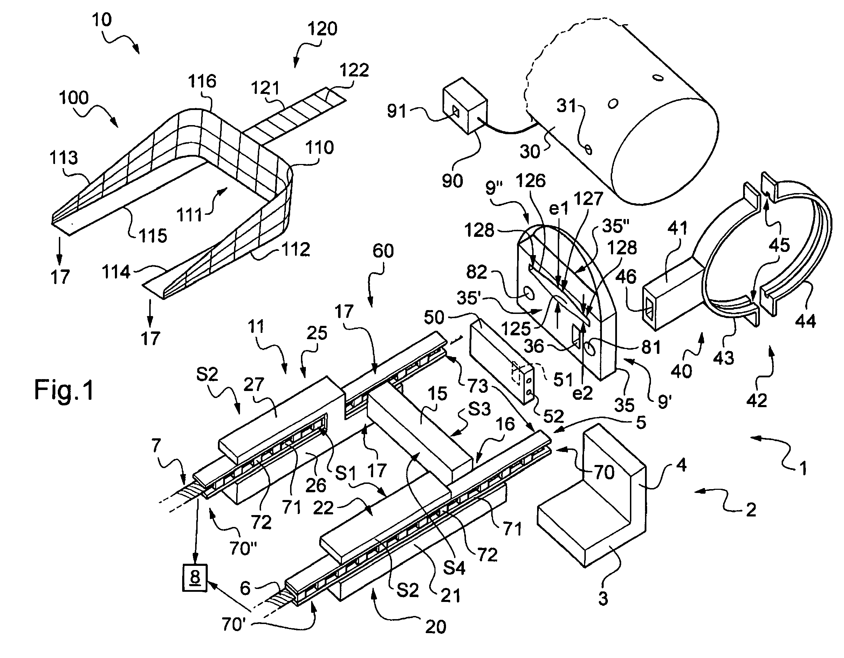

La figure 1 présente un véhicule 1 muni d'au moins un siège 2 selon l'invention. Il est à noter que les divers éléments du véhicule 1 n'ayant pas un lien direct avec l'invention ne sont pas représentés pour ne pas alourdir la figure.

Ce siège 2 est muni d'une assise 3 et d'un dossier 4 pouvant accueillir un individu. En outre, le siège 2 est équipé d'un dispositif de protection 10 pour protéger cet individu suite à un incident, tel qu'un accident.

Dès lors, le siège 2 inclut un harnais 5 de rétention comprenant un sangle d'épaule gauche 6 et une sangle d'épaule droite 7 pouvant coopérer avec une boucle de fermeture 8.

On verra par la suite que les sangles d'épaules gauche 6 et droite 7 peuvent être intégrées au dispositif de protection 10 de protection pour faciliter l'intégration de ce dispositif de protection 10 à un siège.

La figure 1 présente les divers éléments de ce dispositif de protection 10.

Ainsi, le dispositif de protection 10 inclut un ensemble 11 d'organes gonflables pouvant être gonflés dans des conditions prédéterminées par le constructeur du véhicule, afin de protéger l'individu assis sur le siège et notamment sa tête. Cet ensemble 11 d'organes gonflables 15, 20, 25 de protection est éventuellement disposé dans une enveloppe, l'enveloppe comprenant des zones fragilisées pour permettre le déploiement des organes gonflables de protection.

Le dispositif de protection 10 comporte alors une têtière 35 pouvant être agencée sur le dossier 4 d'un siège 2, l'ensemble 11 d'organes gonflables étant fixé à la têtière 35.

Pour gonfler l'ensemble 11 d'organes gonflables dans lesdites conditions prédéterminées, le dispositif de protection 10 est muni d'un gonfleur 30.

Le gonfleur 30 peut contenir de l'hélium pressurisé et maintenu dans une chambre par une membrane. Par le biais d'un courant électrique, il est possible de détériorer la membrane pour permettre au fluide contenu de sortir du gonfleur par des orifices de distribution 31.

A cet effet, le dispositif de protection 10 peut inclure un moyen d'activation 90 pour alimenter en courant électrique le gonfleur dans les conditions prédéterminées. Le moyen d'activation 90 comprend par exemple une batterie fournissant le courant électrique requis au gonfleur quand des capteurs détectent lesdites conditions.

On comprend qu'il est possible d'utiliser tout type de gonfleur et le cas échéant de moyens d'activation pour gonfler à l'aide d'un fluide l'ensemble 11 d'organes gonflables.

Le moyen d'activation peut être agencé sur un piètement du siège 2 et comprendre un moyen d'inhibition 91.

Pour acheminer le fluide du gonfleur 30 vers l'ensemble 11 d'organes gonflables, le dispositif de protection 10 est dépourvu de tuyaux d'acheminement pour faciliter son agencement et sa maintenance notamment.

Par conséquent, le dispositif de protection inclut un support creux 40 coopérant avec la têtière 35, le gonfleur 30 et un boîtier de diffusion 50.

Ce support creux 40 permet alors d'une part de fixer le gonfleur à la têtière et d'autre part d'acheminer le fluide du gonfleur vers les organes gonflables.

En effet, le support creux 40 inclut un socle 41 coopérant avec une mâchoire 42. Cette mâchoire 42 comprend une première bague 43 solidaire du socle 41 et une deuxième bague 44.

La première bague 43 peut alors être fixée à la deuxième bague 44 par des moyens usuels pour enserrer le gonfleur 30.

De plus, la mâchoire 42 comprend une gorge annulaire 45 ménagée par exemple dans la première bague et la deuxième bague. La gorge annulaire communique en outre avec un conduit 46 du socle 41.

La gorge annulaire 45 est par suite placée en vis-à-vis des orifices de diffusion 31 du gonfleur 30. Le fluide s'échappant du gonfleur 30 par les orifices de diffusion 31 passe alors dans la gorge annulaire 45 puis dans le conduit 46.

Par conséquent, la têtière comprend un perçage 36 coopérant avec le socle 41 et un orifice d'entrée 51 du boîtier de diffusion 50, ce boîtier de diffusion 50 étant fixé à une première face 35' de la têtière.

Le boîtier de diffusion 50 inclut alors des sorties 52 communiquant avec l'orifice d'entrée 51 par des conduites internes, les orifices de sortie débouchant sur l'ensemble 11 d'organes gonflables.

Selon une première variante, le socle 41 est fixé à une deuxième face 35" de la têtière afin que le perçage 36 soit en coïncidence du conduit 46.

Selon une deuxième variante, le socle 41 traverse le perçage 36 pour que le conduit 46 débouche sur l'orifice d'entrée 51. Des moyens de fixation peuvent de plus fixer le socle 41 à la deuxième face 35".

Par ailleurs, l'ensemble 11 d'organes gonflables comprend un coussin de nuque 15 dans lequel est disposé le boîtier de diffusion 50. Le coussin de nuque 15 peut être fixé directement à la têtière ou indirectement par le biais du boîtier de diffusion 50.

De plus, cet ensemble 11 inclut un moyen latéral gonflable gauche 20 et un moyen latéral gonflable droit 25 qui coopèrent respectivement avec la sangle d'épaule gauche 6 et la sangle d'épaule droite 7.

De tels moyens latéraux gonflables sont parfois dénommés « seat belt airbag » en langue anglaise.

Dès lors, le coussin de nuque 15 comporte au moins un passage gauche 16 et au moins un passage droit 17 pour acheminer le fluide de gonflage respectivement vers le moyen latéral gonflable gauche 20 et le moyen latéral gonflable droit 25.

Chaque moyen latéral gonflable 20, 25 inclut en outre un coussin inférieur 21, 26 et un coussin supérieur 22, 27, le coussin inférieur 21, 26 d'un moyen latéral gonflable donné communiquant avec le coussin de nuque 15 et le coussin supérieur 22, 27 associé à ce moyen latéral gonflable.

Selon une variante, chaque moyen latéral gonflable 20, 25 inclut seulement un coussin supérieur 22, 27 communiquant avec le coussin de nuque 15

Les coussins supérieurs peuvent se rejoindre, une cloison étanche pouvant séparer les deux coussins supérieurs. De même, les coussins inférieurs peuvent se rejoindre selon une variante non représentée, une cloison étanche pouvant séparer les deux coussins inférieurs.

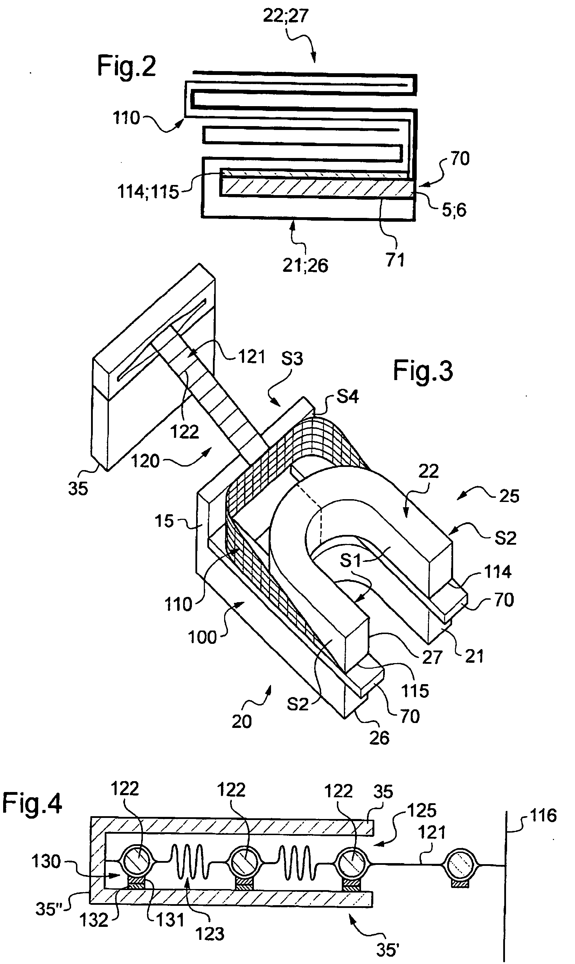

Dès lors, les coussins latéraux supérieurs sont soit indépendants structurellement et fonctionnellement conformément à la réalisation de la figure 1, soit accolés structurellement l'un à l'autre mais fonctionnellement indépendants, soit fusionnés de manière à former un unique coussin gonflable conformément à la réalisation de la figure 2.

Par ailleurs et en référence à la figure 1, le dispositif de protection 10 peut comporter un moyen de glissement 70 par moyen latéral gonflable 20, 25. Par conséquent, le dispositif de protection 10 peut comporter un moyen de glissement gauche 70' coopérant avec le moyen latéral gonflable 20 et un moyen de glissement droit 70" coopérant avec le moyen latéral gonflable droit 25.

Chaque moyen de glissement a alors pour fonction de permettre un mouvement relatif entre le moyen latéral gonflable 20, 25 et une sangle d'épaule 6, 7 coopérant avec ce moyen latéral gonflable 20, 25.

En référence à la figure 3, en dehors des cas où les organes gonflables sont gonflés, lorsque le buste de l'individu assis sur le siège bouge, les moyens latéraux gonflables demeurent fixés à la têtière 35. Par contre, chaque sangle peut se déplacer par rapport au moyen latéral gonflable associé.

Ce moyen de glissement peut comprendre un support 71 allongé, réalisé dans une matière flexible. Le support est éventuellement fixé à un coussin d'un moyen latéral gonflable et à une enveloppe du dispositif de protection.

Par ailleurs, ce support 71 porte une pluralité de guides 72 aptes à être traversés par une sangle d'épaule.

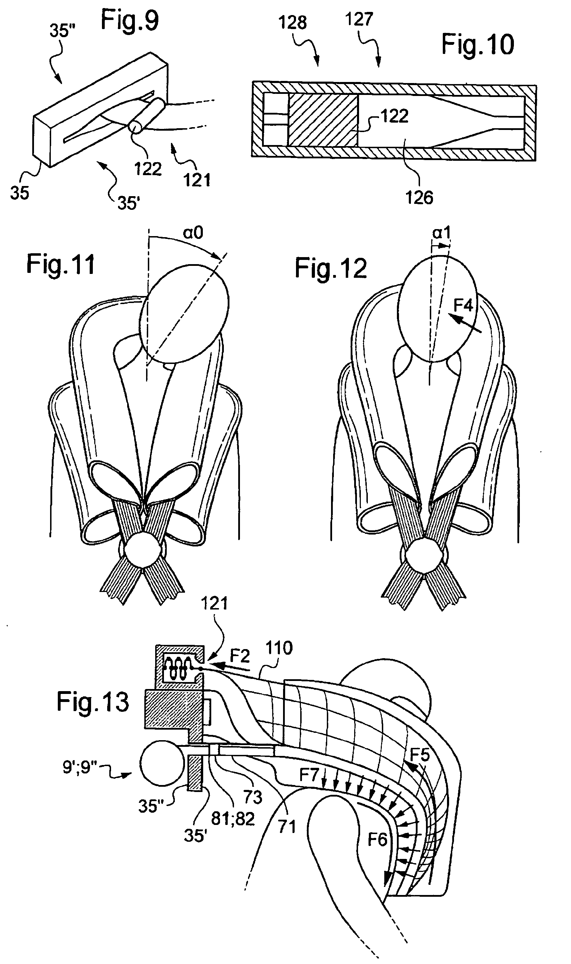

Enfin, le support 71 est fixé à la têtière directement, ou indirectement par une section fusible 73 voire une liaison rotative 82 présente sur la figure 13.

Par ailleurs, en référence à la figure 1 et en présence d'un coussin inférieur, le moyen de glissement est par exemple disposé entre le coussin inférieur et le coussin supérieur.

Le coussin inférieur ou le coussin supérieur peuvent alors être reliés au coussin de nuque. Il est intéressant de relier le coussin inférieur au coussin de nuque et le coussin supérieur au coussin inférieur afin que le coussin inférieur soit rapidement gonflé pour exercer une pré-tension sur la sangle associée.

En référence à la figure 13, il est à noter que la têtière comporte favorablement sur sa deuxième face 35" un enrouleur gauche 9' et un enrouleur droit 9" portant respectivement une sangle d'épaule gauche 6 et une sangle d'épaule droite 7.

De plus, la têtière 35 peut optionnellement comporter sur sa première face 35' une liaison rotative gauche 81 et une liaison rotative droite 82 traversées respectivement par une sangle d'épaule gauche 6 et une sangle d'épaule droite 7. Ainsi, la section fusible 73 de chaque moyen de glissement 70 est éventuellement fixée indirectement à la têtière 35 par une liaison rotative 81, 82.

Chaque liaison rotative peut aussi être fixée au dossier du siège.

En outre, en référence à la figure 1, on note que chaque coussin latéral supérieur 22, 27 comporte une surface interne S1 apte à être en contact avec la tête d'un individu et une surface externe S2 opposée à la surface interne S1.

De plus, le coussin de nuque 15 présente une face interne S3 en regard de la têtière 35 et une face externe S4 en regard des coussins latéraux supérieurs 22, 27.

Par ailleurs, pour maximiser la protection d'un individu, le dispositif de protection 10 comprend un moyen de retenue 100 notamment pour retenir latéralement les coussins latéraux supérieurs 22, 27.

Ce moyen de retenue 100 comporte une sangle de retenue 110 et un dispositif de fixation 120 de la sangle de retenue 110 à la têtière 35.

La sangle de retenue 110 est munie d'un corps de retenue 111. Ce corps de retenue 111 peut être un filet de retenue, ou encore être dépourvu de maillage.

De plus, le corps de retenue 111 peut avoir une forme de C. Dès lors, le corps inclut un fond 116 et deux branches latérales 112, 113.

La forme des branches latérales peut être optimisée pour minimiser la masse de la sangle de retenue. Chaque branche latérale peut avoir une hauteur maximale à proximité de la tête d'un individu notamment. Ainsi, chaque branche latérale peut avoir une forme triangulaire afin de présenter une hauteur qui décroit en partant du fond 116 du corps 111.

Selon un autre aspect, la sangle de retenue 110 peut comprendre un flanc de fixation gauche 114 fixé au moyen de glissement gauche 70', et un flanc de fixation droit 115 fixé au moyen de glissement droit 70" par des moyens usuels.

Par exemple, chaque branche latérale 112, 113 de la sangle de retenue 110 est prolongée par un flanc de fixation pour être fixé à un moyen de glissement.

De plus, la sangle de retenue peut être fixée, au moins localement à une surface externe S2 d'un coussin latéral supérieur. Le gonflement des coussins latéraux supérieurs entraîne alors le déploiement de la sangle de retenue.

Par ailleurs, la sangle de retenue 110 peut être fixée à la face externe S4 du coussin de nuque.

Par exemple, une partie haute du coussin de nuque étant fixée à la têtière, le fond 116 du corps 111 est fixé à une partie basse du coussin de nuque qui est mobile par rapport à la têtière.

Selon un autre aspect, le dispositif de fixation 120 peut comporter une sangle de fixation 121 solidaire de la sangle de retenue 110. Une telle sangle de fixation peut s'étendre longitudinalement vers la têtière 35 à partir du fond 116 du corps 111 de la sangle de retenue.

Cette sangle de fixation 121 coopère avec un logement de fixation 125 du dispositif de fixation.

Ce logement de fixation est ménagé dans la têtière 35. Ainsi, le logement de fixation 125 possède un orifice de sortie 126 qui est traversé par la sangle de fixation 121.

Cet orifice de sortie 126 présente une partie centrale 127 disposée entre deux parties extrêmales 128. La partie centrale 127 a une première épaisseur e1 constante, alors que chaque partie extrémale 128 comporte une deuxième épaisseur e2 qui décroit à partir de la partie centrale 127 pour former un moyen de blocage latéral de la sangle de retenue.

En outre, la sangle de fixation 121 inclut une pluralité d'inserts 122, tels que des inserts cylindriques. Chaque insert 122 a une épaisseur caractéristique inférieure à la première épaisseur e1 et supérieure à ladite deuxième épaisseur e2. Dans le cadre d'un insert cylindrique, cette épaisseur caractéristique peut être le diamètre de l'insert.

La figure 2 présente une sangle de retenue agencée autour des coussins latéraux supérieurs dans une position dite « position non gonflée ».

La sangle de retenue est alors pliée contre les coussins latéraux supérieurs 22, 27, et les coussins latéraux inférieurs 21, 26.

La figure 3 présente une sangle de retenue agencée autour des coussins latéraux supérieurs dans une position dite « position gonflée ».

La sangle de retenue est alors accolée à la surface externe S2 des coussins latéraux supérieurs 22, 27.

On note que le coussin de nuque n'est pas fixé à la têtière sur la figure 2. Cette représentation vise simplement à ne pas alourdir la figure 2, le coussin de nuque devant en effet être fixé à cette têtière.

Bien que schématique, cette représentation présente l'avantage de montrer l'insertion d'une partie de la sangle de fixation 121 dans le logement de fixation 125.

La figure 4 présente l'agencement de la sangle de fixation dans le logement de fixation 125.

Le dispositif de fixation 120 comporte un système de fixation temporaire pour fixer cette sangle de fixation à une paroi du logement de fixation tant que la tension de la sangle de fixation est inférieure à un seuil.

Par exemple, un tel système de fixation temporaire est muni d'un système auto-agrippant 130.

Ce système auto-agrippant 130 comporte un premier moyen auto-agrippant 131 fixé sur la sangle de fixation 121 en vis-à-vis du logement de fixation sous chaque insert 122. De plus, le système auto-agrippant 130 est pourvu d'un deuxième moyen auto-agrippant 132 fixé sur une paroi du logement de fixation 125 pour coopérer par interférence de forme avec chaque premier moyen auto-agrippant 131.

Eventuellement, le premier moyen auto-agrippant 131 comporte une première bande auto-agrippante par insert. Le deuxième moyen auto-agrippant 132 peut comporter une deuxième bande auto-agrippante par première bande, ou une unique deuxième bande coopérant avec toutes les premières bandes.

Dès lors, une bande peut comporter des crochets, l'autre bande ayant des boucles aptes à être saisies par lesdits crochets.

De plus, la sangle de fixation 121 incluant une pluralité d'inserts 122 séparés deux à deux par une portion de sangle 123, chaque portion de sangle 123 séparant deux inserts 122 au sein d'un logement est pliée

Par suite, préalablement à un incident, chaque moyen latéral gonflable se trouve dans une position non gonflée.

Par contre, si un incident se produit selon des conditions prédéterminées par le constructeur, le gonfleur 30 expulse un fluide par ses orifices de diffusion 31.

Ce fluide traverse le support 40 puis le boîtier de diffusion 50 pour se répandre dans le coussin de nuque 15, ce coussin de nuque 15 étant par suite gonflé.

En parallèle, une partie du fluide passe du coussin de nuque 15 vers les moyens latéraux gonflables 20, 25 en traversant les passages 16, 17 restreints du coussin de nuque prévus à cet effet.

Plus particulièrement, le fluide pénètre dans les coussins inférieurs 21, 26 le cas échéant, puis rejoint les coussins supérieurs 22, 27.

Par conséquent, le dispositif de protection 10 passe d'un premier état dit « non gonflé » vers un état dit « gonflé ».

Le gonflement des moyens latéraux gonflables 20, 25 induit de plus le déploiement de la sangle de retenue 110, la sangle de retenue étant accolée à la surface externe des coussins latéraux supérieurs.

A ce stade, les moyens latéraux gonflables 20, 25 et notamment les coussins inférieurs 21, 26 exercent une force de friction sur l'individu.

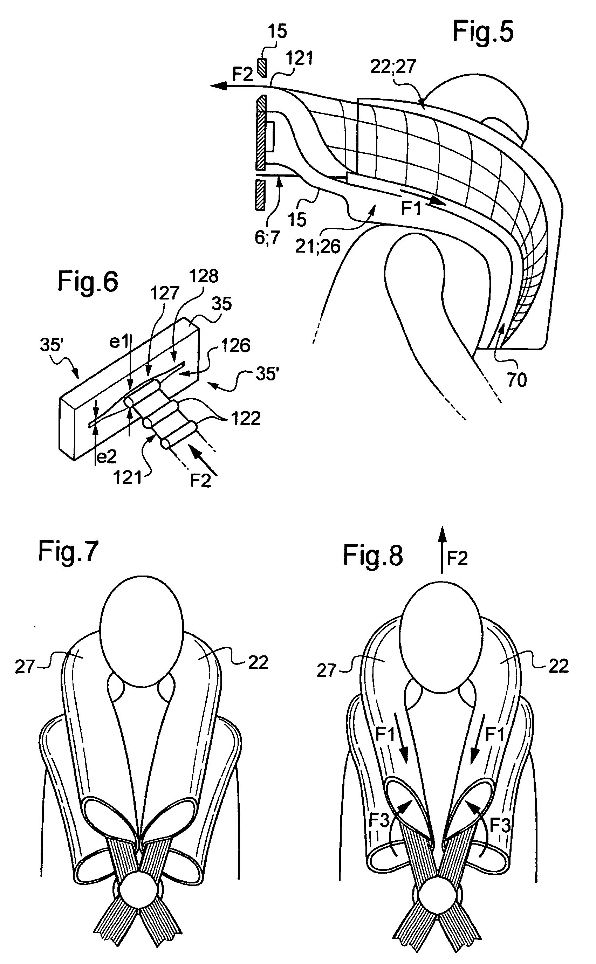

En référence à la figure 5, lorsque l'individu subit des forces d'inertie longitudinales, le buste de cet individu se déplace vers l'avant.

Les forces de friction évoquées précédemment tendent à maintenir les moyens latéraux gonflables contre le buste.

Toutefois, une force de traction représentée par la flèche F1 est exercée notamment sur les zones fusibles 73 des moyens de glissement 70. A compter d'un seuil, les zones fusibles sont rompues. Il en résulte que les moyens latéraux gonflables se déplacent conjointement avec le buste de l'individu en s'éloignant du dossier 4 et de la têtière 35 pour continuer à protéger cet individu.

Par contre, le coussin de nuque reste fixé au moins partiellement à cette têtière 35.

Par conséquent, quand le buste de l'individu revient vers le dossier 4 à l'issue de son mouvement vers l'avant, le coussin de nuque reste en position pour minimiser un contact éventuel entre la nuque de l'individu et la têtière 35.

De plus, en référence à la figure 6, la sangle de fixation 121 traverse l'orifice de sortie 126 au niveau de sa partie centrale 127.

En outre, la sangle de retenue tend à se déplacer vers l'avant conjointement avec les moyens de guidage 70. Le système auto-agrippant 130 qui coopère avec la sangle de fixation 121 induit alors la création d'une force de retenue représentée par la flèche F2.

A partir d'un seuil, l'insert le plus proche de l'orifice de sortie se désolidarise de la paroi du logement. La portion de sangle pliée solidaire de cet insert se déplie. Cependant, en fonction de la valeur des forces d'inertie longitudinales, l'insert suivant peut rester fixé au logement.

L'invention peut alors comprendre une pluralité d'inserts pour optimiser son fonctionnement.

En référence à la figure 7, en l'absence de la sangle de retenue, les coussins latéraux supérieurs se déplacent simplement avec les moyens de glissement.

Par contre, en référence à la figure 8, la force de retenue induite par le moyen de retenue induit un rapprochement favorable des coussins latéraux supérieurs de la tête de l'individu selon les flèches F3.

En référence à la figure 9, lorsque l'individu subit des forces d'inertie latérales, le buste de cet individu se déplace latéralement. Dès lors, la sangle de fixation se déplace dans l'orifice de sortie 126 pour atteindre une partie extrémale 128 de cet orifice de sortie 126.

Les inserts empêchent alors la sangle de fixation de s'échapper du logement de fixation 125.

La figure 10 explicite en effet une interférence de forme entre un insert 122 et la têtière.

Sur un dispositif dépourvu de l'invention, la tête d'un individu peut parcourir un secteur angulaire α0 avant d'entrer en contact avec un coussin latéral supérieur. En effet, en l'absence de l'invention, ce coussin latéral supérieur peut se déplacer et augmenter la liberté de mouvement de la tête.

Par contre, en référence à la figure 12, la sangle de fixation 121 du moyen de retenue tend à bloquer latéralement la sangle de retenue et de fait les coussins latéraux supérieurs. La tête d'un individu peut alors parcourir un secteur angulaire α1 minimisé avant d'entrer en contact avec un coussin latéral supérieur.

En référence à la figure 13, le moyen de retenue peut aussi engendrer un déplacement vers le haut du moyen de guidage à proximité de la boucle de fermeture du harnais, conformément à la flèche F5. Cependant, ce déplacement reste limité.

En effet, les efforts représentés par les flèches F7 exercés sur le moyen du guidage sous l'effet de la pression du fluide dans les coussins latéraux supérieurs et sous l'effet des forces d'inertie latérales induisent une importante friction. Les forces de friction sont représentées par la flèche F6.

Cette friction va alors favorablement à l'encontre dudit déplacement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de protection (10) d'un individu maintenu sur un siège (2) d'un véhicule à l'aide d'un harnais (5) comprenant une sangle d'épaule gauche (6) et une sangle d'épaule droite (7), ledit dispositif (10) ayant une têtière (35) portant un ensemble (11) d'organes gonflables de protection incluant un coussin de nuque (15) ainsi qu'un moyen latéral gonflable gauche (20) et un moyen latéral gonflable droit (25), ledit dispositif de protection (10) comportant un moyen de glissement (70) par moyen latéral gonflable (20, 25) pouvant être traversé par une sangle d'épaule (6, 7) pour permettre un mouvement relatif entre ledit moyen latéral gonflable (20, 25) et une sangle d'épaule (6, 7), ledit coussin de nuque (15) étant fixé à la têtière (35) et communiquant avec chaque moyen latéral gonflable (20, 25), chaque moyen latéral gonflable (20, 25) ayant un coussin latéral supérieur (22, 27) fixé à un moyen de glissement (70), chaque coussin latéral supérieur (22, 27) comportant une surface interne (S1) apte à être en contact avec la tête de l'individu et une surface externe (S2) opposée à la surface interne (S1),
**caractérisé en ce que** ledit dispositif de protection (10) possède un moyen de retenue (100) pour retenir latéralement lesdits coussins latéraux supérieurs (22, 27), ledit moyen de retenue (100) comportant une sangle de retenue (110) accolée à la surface externe (S2) desdits coussins latéraux supérieurs (22, 27), ledit moyen de retenue (100) ayant un dispositif de fixation (120) de ladite sangle de retenue (110) à la têtière (35).

2. Dispositif de protection selon la revendication 1,
**caractérisé en ce que** les coussins latéraux supérieurs (22, 27) sont soit indépendants structurellement et fonctionnellement, soit accolés structurellement l'un à l'autre mais fonctionnellement indépendants, soit fusionnés de manière à former un unique coussin.

3. Dispositif de protection selon l'une quelconque des revendications 1 à 2,
**caractérisé en ce que** ladite sangle de retenue (110) comporte un corps de retenue englobant chaque coussin latéral supérieur (22, 27), le corps de retenue étant plein de manière à être dépourvu de maille creuse.

4. Dispositif de protection selon l'une quelconque des revendications 1 à 2,
**caractérisé en ce que** ladite sangle de retenue (110) comporte un maillage plaqué contre les surfaces externes des coussins latéraux supérieurs

5. Dispositif de protection selon l'une quelconque des revendications 1 à 4,
**caractérisé en ce que**, ledit dispositif de protection (10) comportant un moyen de glissement gauche (70') coopérant avec un moyen latéral gonflable gauche (20) et un moyen de glissement droit (70") coopérant avec un moyen latéral gonflable droit (25), ladite sangle de retenue (110) comporte un flanc de fixation gauche (114) fixé au moyen de glissement gauche (70') et un flanc de fixation droit (115) fixé au moyen de glissement droit (70").

6. Dispositif de protection selon l'une quelconque des revendications 1 à 5,
**caractérisé en ce que** ladite sangle de retenue (110) est fixée à une surface externe (S2) de chaque coussin latéral supérieur (22, 27).

7. Dispositif de protection selon l'une quelconque des revendications 1 à 6,
**caractérisé en ce que**, ledit coussin de nuque (15) ayant une face interne (S3) en regard de la têtière (35) et une face externe (S4) en regard des coussins latéraux supérieurs (22, 27), ladite sangle de retenue (110) est fixée à ladite face externe (S4).

8. Dispositif de protection selon l'une quelconque des revendications 1 à 7,
**caractérisé en ce que** ledit dispositif de fixation (120) comporte une sangle de fixation (121) solidaire de ladite sangle de retenue (110) ainsi qu'un logement de fixation (125) ménagé dans la têtière (35), ledit logement de fixation (125) comportant un orifice de sortie (126) traversé par ladite sangle de fixation (121).

9. Dispositif de protection selon la revendication 8,
**caractérisé en ce que** ledit orifice de sortie (126) présente une partie centrale (127) comprise entre deux parties extrêmales (128), ladite partie centrale (127) ayant une première épaisseur (e1) constante, et chaque partie extrémale (128) ayant une deuxième épaisseur (e2) décroissant à partir de la partie centrale (127) pour former un moyen de blocage latéral de la sangle de retenue.

10. Dispositif de protection selon la revendication 9,
**caractérisé en ce que** chaque moyen de glissement (70) étant fixé par une section fusible (73) à ladite têtière (35), ladite sangle de fixation (121) inclut une pluralité d'inserts (122), chaque insert (122) ayant une épaisseur inférieure à ladite première épaisseur (e1) pour pouvoir s'échapper dudit logement de fixation (125) via ladite partie centrale (126) sous l'effet de forces d'inertie entraînant la rupture de ladite section fusible (73), chaque insert (122) ayant une épaisseur supérieure à ladite deuxième épaisseur (e2) afin de ne pas pouvoir s'échapper dudit logement de fixation (125) via une partie extrémale (128).

11. Dispositif de protection selon l'une quelconque des revendications 8 à 10,
**caractérisé en ce que**, ladite sangle de fixation (121) incluant une pluralité d'inserts (122), ledit dispositif de fixation (120) est muni d'un système auto-agrippant (130) comportant un premier moyen auto-agrippant (131) fixé sur la sangle de fixation (121) en vis-à-vis du logement de fixation sous chaque insert (122), ledit système auto-agrippant (130) comportant un deuxième moyen auto-agrippant (132) fixé sur une paroi dudit logement de fixation (125) coopérant par interférence de forme avec chaque premier moyen auto-agrippant (131).

12. Dispositif de protection selon l'une quelconque des revendications 8 à 11,
**caractérisé en ce que** ladite sangle de fixation (121) incluant une pluralité d'inserts (122) séparés deux à deux par une portion de sangle (123), chaque portion de sangle (123) séparant deux inserts (122) au sein d'un logement est pliée.

13. Dispositif de protection selon l'une quelconque des revendications 1 à 12,
**caractérisé en ce que** chaque moyen latéral gonflable (20, 25) comporte un coussin latéral inférieur (21, 266).

14. Dispositif de protection selon l'une quelconque des revendications 1 à 13,
**caractérisé en ce que** ladite têtière (35) comporte un gonfleur.

15. Siège (2) muni d'un dossier (4) et d'un harnais de rétention (5) d'un individu comprenant une sangle d'épaule gauche (6) et une sangle d'épaule droite (7),
**caractérisé en ce que** ledit siège comporte un dispositif de protection (10) selon l'une quelconque des revendications 1 à 14.

16. Véhicule (1),
**caractérisé en ce qu'**il comporte au moins un siège (2) selon la revendication 15.

## Patentansprüche

1. Schutzvorrichtung (10) für einen Fahrzeuginsassen, der mit Hilfe eines Hosenträgergurts (5) mit einem linken Schultergurt (6) und einem rechten Schultergurt (7) auf einem Sitz (2) gehalten wird, wobei die Vorrichtung (10) ein Kopfteil (35) aufweist, das eine Einheit (11) aus aufblasbaren Schutzelementen trägt, die ein Nackenkissen (15) sowie ein linkes seitliches aufblasbares Mittel (20) und ein rechtes seitliches aufblasbares Mittel (25) umfasst, wobei die Schutzvorrichtung (10) ein Gleitmittel (70) pro seitlichem aufblasbarem Mittel (20, 25) aufweist, das von einem Schultergurt (6, 7) durchquert werden kann, um eine Relativbewegung zwischen dem seitlichen aufblasbaren Mittel (20, 25) und einem Schultergurt (6, 7) zu erlauben, wobei das Nackenkissen (15) an dem Kopfteil (35) befestigt ist und mit jedem seitlichen aufblasbaren Mittel (20, 25) verbunden ist, wobei jedes seitliche aufblasbare Mittel (20, 25) ein oberes seitliches Kissen (22, 27) aufweist, das an einem Gleitmittel (70) befestigt ist, wobei jedes obere seitliche Kissen (22, 27) eine Innenfläche (S1) aufweist, die den Kopf des Insassen berühren kann, und eine äußere Fläche (S2), die der inneren Fläche (S1) gegenüberliegt,
**dadurch gekennzeichnet, dass** die Schutzvorrichtung (10) ein Rückhaltemittel (100) aufweist zum seitlichen Zurückhalten der oberen seitlichen Kissen (22, 27), wobei das Rückhaltemittel (100) einen Rückhaltegurt (110) aufweist, der an der Außenfläche (S2) der oberen seitlichen Kissen (22, 27) angefügt ist, wobei das Rückhaltemittel (100) eine Vorrichtung (120) zur Befestigung des Rückhaltegurts (110) an dem Kopfteil (35) aufweist.

2. Schutzvorrichtung nach Anspruch 1,
**dadurch gekennzeichnet, dass** die oberen seitlichen Kissen (22, 27) entweder strukturell und funktionell unabhängig sind, oder strukturell aneinandergefügt sind, jedoch funktionell unabhängig sind, oder miteinander vereinigt sind, sodass sie ein einziges Kissen bilden.

3. Schutzvorrichtung nach einem der Ansprüche 1 bis 2,
**dadurch gekennzeichnet, dass** der Rückhaltegurt (110) einen Rückhaltekörper aufweist, der jedes obere seitliche Kissen (22, 27) umschließt, wobei der Rückhaltekörper massiv ist, sodass er keine Hohlmaschen aufweist.

4. Schutzvorrichtung nach einem der Ansprüche 1 bis 2,
**dadurch gekennzeichnet, dass** der Rückhaltegurt (110) ein Netzwerk aufweist, das gegen die äußeren Flächen der oberen seitlichen Kissen angepresst ist.

5. Schutzvorrichtung nach einem der Ansprüche 1 bis 4,
**dadurch gekennzeichnet, dass** die Schutzvorrichtung (10) ein linkes Gleitmittel (70) aufweist, das mit einem linken seitlichen aufblasbaren Mittel (20) und einem rechten Gleitmittel (70') zusammenwirkt, das mit einem rechten seitlichen aufblasbaren Mittel (25) zusammenwirkt, wobei der Rückhaltegurt (110) einen linken Befestigungsflansch (114) aufweist, der an dem linken Gleitmittel (70') befestigt ist und einen rechten Befestigungsflansch (115), der an dem rechten Gleitmittel (70") befestigt ist.

6. Schutzvorrichtung nach einem der Ansprüche 1 bis 5,
**dadurch gekennzeichnet, dass** der Rückhaltegurt (110) an einer äußeren Fläche (S2) eines jeden oberen seitlichen Kissens (22, 27) befestigt ist.

7. Schutzvorrichtung nach einem der Ansprüche 1 bis 6,
**dadurch gekennzeichnet, dass** das Nackenkissen (15) eine innere Fläche (S3) gegenüber dem Kopfteil (35) und eine äußere Fläche (S4) gegenüber den oberen seitlichen Kissen (22, 27) aufweist, wobei der Rückhaltegurt (110) an der äußeren Fläche (S4) befestigt ist.

8. Schutzvorrichtung nach einem der Ansprüche 1 bis 7,
**dadurch gekennzeichnet, dass** die Befestigungsvorrichtung (120) einen Befestigungsgurt (121) aufweist, der mit dem Rückhaltegurt (110) fest verbunden ist, sowie ein Befestigungslager (125), das in dem Kopfteil (35) angeordnet ist, wobei das Befestigungslager (125) eine Ausgangsöffnung (126) aufweist, die von dem Befestigungsgurt (121) durchquert wird.

9. Schutzvorrichtung nach Anspruch 8,
**dadurch gekennzeichnet, dass** die Ausgangsöffnung (126) einen mittleren Bereich (127) aufweist, der zwischen zwei Endbereichen (128) liegt, wobei der mittlere Bereich (127) eine erste konstante Dicke (e1) aufweist, und jeder Endbereich (128) eine zweite Dicke (e2) aufweist, die ausgehend von dem mittleren Bereich (127) abnimmt, um ein Mittel zur seitlichen Blockierung des Rückhaltegurtes zu bilden.

10. Schutzvorrichtung nach Anspruch 9,
**dadurch gekennzeichnet, dass** jedes Gleitmittel (70) mit einem schmelzbaren Abschnitt (73) an dem Kopfteil (35) befestigt ist, wobei der Befestigungsgurt (121) eine Mehrzahl von Einsätzen (122) aufweist, wobei jeder Einsatz (122) eine Dicke aufweist, die kleiner ist als die erste Dicke (e1), um aus dem Befestigungslager (125) über den mittleren Bereich (126) unter der Wirkung von Trägheitskräften, die einen Bruch des schmelzbaren Abschnitts (73) bewirken, entweichen zu können, wobei jede Einlage (122) eine Dicke aufweist, die größer ist als die zweite Dicke (e2), um nicht aus dem Befestigungslager (125) über einen Endbereich (128) entweichen zu können.

11. Schutzvorrichtung nach einem der Ansprüche 8 bis 10,
**dadurch gekennzeichnet, dass** der Befestigungsgurt (121) eine Mehrzahl von Einlagen (122) aufweist, wobei die Befestigungsvorrichtung (21) mit einem selbstklemmenden System (130) versehen ist, mit einem ersten Selbstklemmungsmittel (131), das auf dem Befestigungsgurt (121) gegenüber dem Befestigungslager unter jeder Einlage (122) befestigt ist, wobei das selbstklemmende System (130) ein zweites Selbstklemmungsmittel (132) aufweist, das auf einer Wandung des Befestigungslagers (125) befestigt ist, das durch Formschluss mit jedem ersten Selbstklemmungsmittel (131) zusammenwirkt.

12. Schutzvorrichtung nach einem der Ansprüche 8 bis 11,
**dadurch gekennzeichnet, dass** der Befestigungsgurt (121) eine Mehrzahl von Einlagen (122) aufweist, die jeweils paarweise durch einen Gurtabschnitt (123) getrennt sind, wobei jeder Gurtabschnitt (123), der zwei Einlagen (122) in dem Lager voneinander trennt, gefaltet ist.

13. Schutzvorrichtung nach einem der Ansprüche 1 bis 12,
**dadurch gekennzeichnet, dass** jedes aufblasbare seitliche Mittel (20, 25) ein unteres seitliches Kissen (21, 266) aufweist.

14. Schutzvorrichtung nach einem der Ansprüche 1 bis 13,
**dadurch gekennzeichnet, dass** das Kopfteil (35) eine Aufblasvorrichtung aufweist.

15. Sitz (2) mit einer Rückenlehne (4) und einem Hosenträger-Rückhaltegurt (5) für einen Insassen mit einem linken Schultergurt (6) und einem rechten Schultergurt (7),
**dadurch gekennzeichnet, dass** der Sitz eine Schutzvorrichtung (10) nach einem der Ansprüche 1 bis 14 aufweist.

16. Fahrzeug (1),
**dadurch gekennzeichnet, dass** es mindestens einen Sitz (2) nach Anspruch 15 aufweist.

## Claims

1. A device (10) for protecting an individual held on a seat (2) of a vehicle with the aid of a harness (5) comprising a left-hand shoulder strap (6) and a right-hand shoulder strap (7), said device (10) having a head rest (35) bearing a set (11) of inflatable protective members including a neck cushion (15) and a left-hand inflatable lateral means (20) and a right-hand inflatable lateral means (25), said protective device (10) comprising a means (70) for sliding by inflatable lateral means (20, 25) through which a shoulder strap (6, 7) can pass in order to permit a relative movement between said inflatable lateral means (20, 25) and a shoulder strap (6, 7), said neck cushion (15) being fastened to the head rest (35) and communicating with each inflatable lateral means (20, 25), each inflatable lateral means (20, 25) having an upper lateral cushion (22, 27) fastened to a sliding means (70), each upper lateral cushion (22,27) comprising an inner surface (S1) suitable for being in contact with the head of the individual and an outer surface (S2) opposed to said inner surface (S1),
**characterised in that** said protective device (10) has a retaining means (100) for laterally retaining said upper lateral cushions (22, 27), said retaining means (100) comprising a retaining strap (110) adjoined to the outer surface (S2) of said upper lateral cushions (22, 27), said retaining means (100) having a device (120) for fastening said retaining strap (110) to the head rest (35).

2. A protective device according to Claim 1,
**characterised in that** the upper lateral cushions (22, 27) are either structurally and functionally independent, or adjoined structurally to one another but functionally independent, or merged so as to form a single cushion.

3. A protective device according to any one of Claims 1 to 2,
**characterised in that** said retaining strap (110) comprises a retaining body encompassing each upper lateral cushion (22, 27), the retaining body being solid so as to be devoid of open mesh.

4. A protective device according to any one of Claims 1 to 2,
**characterised in that** said retaining strap (110) comprises a mesh flattened against the outer surfaces of the upper lateral cushions.

5. A protective device according to any one of Claims 1 to 4,
**characterised in that**, said protective device (10) comprising a left-hand sliding means (70') cooperating with a left-hand inflatable lateral means (20) and a right-hand sliding means (70") cooperating with a right-hand inflatable lateral means (25), said retaining strap (110) comprises a left-hand fastening flank (114) fastened to the left-hand sliding means (70') and a right-hand fastening flank (115) fastened to the right-hand sliding means (70").

6. A protective device according to any one of Claims 1 to 5,
**characterised in that** said retaining strap (110) is fastened to an outer surface (S2) of each upper lateral cushion (22, 27).

7. A protective device according to any one of Claims 1 to 6,
**characterised in that**, said neck cushion (15) having an inner face (S3) facing the head rest (35) and an outer face (S4) facing the upper lateral cushions (22, 27), said retaining strap (110) is fastened to said outer face (S4).

8. A protective device according to any one of Claims 1 to 7,
**characterised in that** said fastening device (120) comprises a fastening strap (121) integral with said retaining strap (110) and a fastening receptacle (125) formed in the head rest (35), said fastening receptacle (125) comprising an exit orifice (126) through which said fastening strap (121) passes.

9. A protective device according to Claim 8,
**characterised in that** said exit orifice (126) has a central portion (127) included between two end portions (128), said central portion (127) having a first, constant, thickness (e1), and each end portion (128) having a second thickness (e2) which decreases from the central portion (127) to form a lateral blocking means for the retaining strap.

10. A protective device according to Claim 9,
**characterised in that**, each sliding means (70) being fastened to said head rest (35) by a meltable section (73), said fastening strap (121) includes a plurality of inserts (122), each insert (122) having a thickness less than said first thickness (e1) in order to be able to escape from said fastening receptacle (125) via said central portion (126) under the action of forces of inertia which bring about the breaking of said meltable section (73), each insert (122) having a thickness greater than said second thickness (e2) in order not to be able to escape from said fastening receptacle (125) via an end portion (128).

11. A protective device according to any one of Claims 8 to 10,
**characterised in that**, said fastening strap (121) including a plurality of inserts (122), said fastening device (120) is provided with a self-gripping system (130) comprising a first self-gripping means (131) fastened on the fastening strap (121) facing the fastening receptacle beneath each insert (122), said self-gripping system (130) comprising a second self-gripping means (132) fastened on a wall of said fastening receptacle (125) which cooperates by shape interference with each first self-gripping means (131).

12. A protective device according to any one of Claims 8 to 11,
**characterised in that**, said fastening strap (121) including a plurality of inserts (122) separated two by two by a strap portion (123), each strap portion (123) separating two inserts (122) within a receptacle is folded.

13. A protective device according to any one of Claims 1 to 12,
**characterised in that** each inflatable lateral means (20, 25) comprises a lower lateral cushion (21, 266).

14. A protective device according to any one of Claims 1 to 13,
**characterised in that** said head rest (35) comprises an inflator.

15. A seat (2) provided with a backrest (4) and a harness (5) for retention of an individual, comprising a left-hand shoulder strap (6) and a right-hand shoulder strap (7),
**characterised in that** said seat comprises a protective device (10) according to any one of Claims 1 to 14.

16. A vehicle (1),
**characterised in that** it comprises at least one seat (2) according to Claim 15.
